# FASCICULE DE BREVET EUROPEEN

(11) **EP 3 334 653 B1**
(45) Date de publication et mention de la délivrance du brevet: **19.06.2019**
(21) Numéro de dépôt: 16741025.7
(22) Date de dépôt: 20.07.2016
(51) Int. Cl.: B64D 27/26

(54) **MÂT DE MOTEUR D'AÉRONEF À OSSATURE MULTIFONCTIONNELLE INTÉGRÉE**
PYLON FLUGZEUGTRIEBWERK MIT INTEGRIERTEM MULTIFUNKTIONSRAHMEN
AIRCRAFT ENGINE PYLON WITH INBUILT MULTIFUNCTIONAL FRAMEWORK

(30) Priorité: 12.08.2015 FR 1557700
(43) Date de publication de la demande: 20.06.2018
(73) Titulaire: Sogeclair SA, 31700 Occitanie Blagnac (FR)
(72) Inventeur: GIAVARINI, Jean Paul, 31620 Castelnau d'Estretefonds (FR)
(74) Mandataire: Junca, Eric
(86) Numéro de dépôt international: PCT/EP2016/067266
(87) Numéro de publication internationale: WO 2017/025288

(56) Documents cités:
- FR-A1- 2 931 133
- US-A1- 2011 121 132
- US-A1- 2012 104 162

## Description

### DOMAINE TECHNIQUE

L'invention se rapporte à un mât d'aéronef destiné à accrocher de manière rigide un moteur à la voilure ou au fuselage d'un aéronef, par suspension ou fixation, ce mât présentant une structure à ossature multifonctionnelle intégrée.

L'invention concerne l'interface entre un moteur et le reste d'un appareillage pour tout type de produit industriel, en particulier dans les domaines de l'aéronautique et du spatial pour lesquels l'optimisation de la masse et des cycles de production constituent des conditions essentielles.

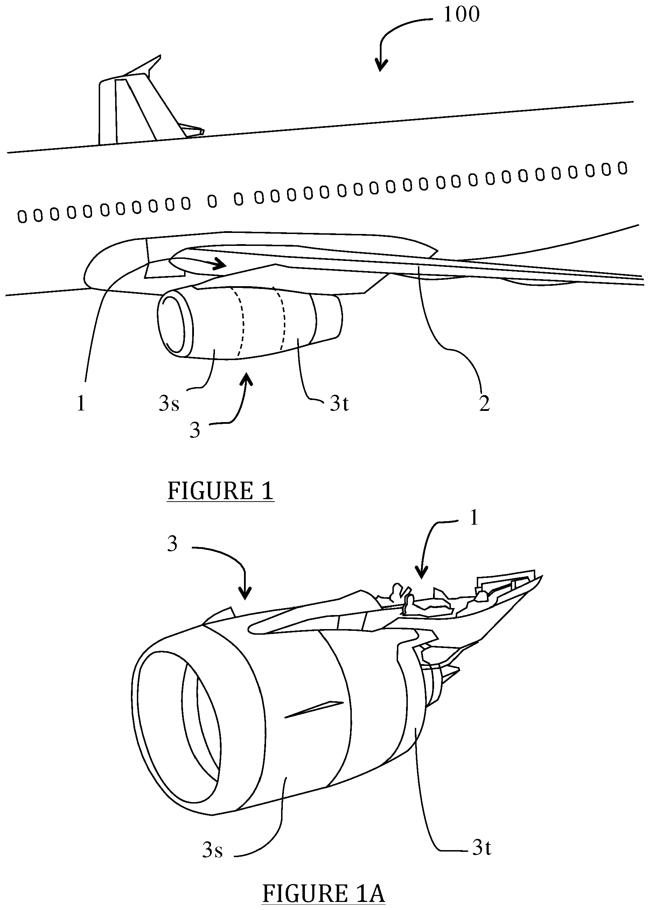

Dans le domaine avionique, cette liaison est un mât qui relie tout type de moteurs, en particulier de turboréacteurs ou de turbopropulseurs. La figure 1 et son agrandissement au niveau du mât 1 et du turboréacteur 3 (figure 1A) illustrent la position d'un mât conventionnel 1 d'avion 100 entre une aile 2 et le turboréacteur 3 de cet avion 100. Le mât 1 est équipé d'un système de liaison à l'aile 2 et au turboréacteur 3 par des accrochages centraux et arrière, respectivement au niveau arrière du carter de soufflante 3s et au niveau du carter de turbine 3t.

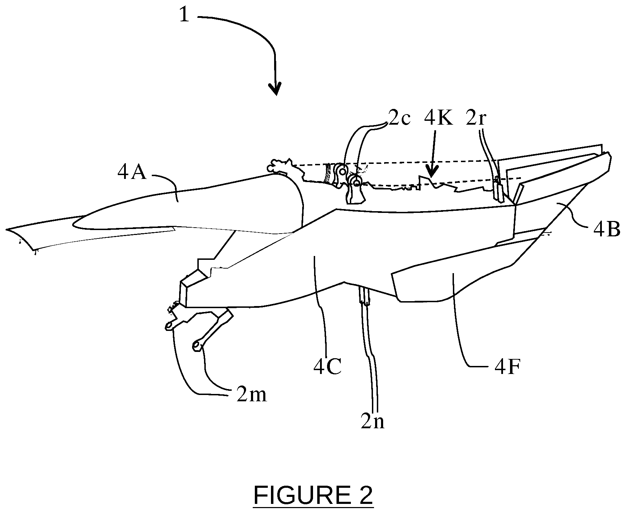

Comme illustré par la vue frontale de la figure 2, un mât 1 est constitué classiquement par l'assemblage de plusieurs structures: une structure rigide centrale primaire 4C, entourée de structures aérodynamiques secondaires - une structure avant 4A et une structure arrière 4B -, de part et d'autre d'un carénage de raccordement 4K à la voilure 2 (carénage dit de Karman, dont l'emplacement est suggéré en traits pointillés), ainsi qu'un carénage aérodynamique inférieur 4F disposé à la fois sous la structure primaire 4C et sous la structure aérodynamique arrière 4B. Sur cette figure, apparaissent également les attaches d'accrochage du mât sur l'aile et sur les carters du turboréacteur, à savoir respectivement les attaches 2c, 2r et 2m, 2n.

### ÉTAT DE LA TECHNIQUE

L'assemblage mécanique d'un mât est constitué de plusieurs centaines d'éléments rassemblés dans les structures de base, et destinés à répondre aux sollicitations mécaniques ou à véhiculer des fluides tout en essayant de répondre aux objectifs de masse et de cycle de production.

Les structures de mât d'aéronef forment un organe complexe et très contraint par l'environnement moteur avec de multiples fonctions à satisfaire, notamment: aérodynamique, structurante, de reprise d'efforts de poussée, de transmission des systèmes de câblages électriques, d'approvisionnement en carburant, en hydraulique et pneumatique entre le moteur et la voilure par des tuyaux appropriés.

Ces structures sont habituellement constituées de caissons formés par l'assemblage de longerons supérieurs et inférieurs raccordés par des panneaux de carénage latéraux rapportés et rigidifiés par des nervures transversales. Ces caissons sont conçus pour transmettre à la voilure les efforts statiques et dynamiques générés par les moteurs : masse, poussée, efforts dynamiques, vibrations.

Cependant, l'assemblage de telles structures - solidarisé en général par vis et rivets - présente de nombreux inconvénients mécaniques liés au nombre important de pièces et donc à la complexité de cet assemblage: vibrations, dilatations, masse, aérodynamisme, transmission de systèmes plus nombreux, etc., alors que les moteurs sont de plus en plus volumineux et lourds.

Pour remédier à ces problèmes, un grand nombre d'améliorations ont été proposées.

Par exemple, il est connu du document de brevet US 2012/080554 d'ajouter des pions de cisaillement aux attaches voilure avant pour réaliser la reprise des efforts exercés selon les directions longitudinales, transversales et verticales du mât.

Pour réduire la flexion des ferrures d'attaches avant latérales sur la voilure, le document de brevet EP 2 426 051 prévoit d'équiper une attache avant centrale d'une rotule alignée transversalement sur des premiers orifices des attaches avant latérales.

Dans le document de brevet US 8 366 039, l'attache avant est flexible afin d'absorber les déformations des pièces de carénage avant provoquées en particulier par des percussions de pale de la soufflante.

Par ailleurs, dans le document US 8 336 813, la partie inférieure arrière du mât est incurvée en direction de l'emplanture de l'aile correspondante, afin de provoquer une déviation de l'écoulement aérodynamique et de compenser les variations de portance locale dues à la présence du mât.

Pour limiter la traînée aérodynamique et donc de diminuer la consommation de carburant, le document de brevet EP 2 030 892 propose une articulation entre deux parties du mât fixées à un carter du moteur et à l'aile d'avion, ce qui permet d'éloigner le moteur de l'aile en phase de croisière et de les rapprocher - et donc d'éloigner le moteur du sol - en phase de décollage ou d'atterrissage.

Dans la solution décrite dans le document US 6 838 955, l'élargissement progressif du mât dans sa partie arrière et le montage des éléments de jonction dans l'attache arrière permettent d'augmenter la distance entre ces éléments de jonction et donc de transférer des efforts sensiblement plus élevés. Ainsi, des moteurs plus lourds et plus puissants peuvent être montés à la place de ceux prévus pour une voilure donnée.

D'autres solutions prévoient des moyens additionnels: palonniers, vérins, pistons hydrauliques, bielles, etc. afin de s'opposer à la flexion longitudinale du moteur ou d'améliorer la reprise d'efforts de poussée (cf. en particulier les documents EP 1 571 080, EP 1 571 081 et EP 1 571 082).

De plus, le document US 20120104162 décrit un mât d'aéronef comportant des moyens d'accrochage rigides au moteur et à la voilure, avec un canal pour des équipements et des systèmes de transmission et une ossature distincte. Et le document FR 2 931 133 divulgue un mât d'aéronef avec des canaux pour des équipements et des systèmes de transmission, ces canaux étant de chaque côté d'un caisson du mât. Enfin le document US 20110121132 montre un autre mât comportant une ossature sans logement pour les équipements et les systèmes de transmission entre le moteur et la voilure.

De tels assemblages augmentent le nombre de pièces, donc la masse globale, et restent complexes dans leur structure. Ainsi, les caissons constitutifs demeurent d'approche difficile et limitée, ce qui ne permet pas d'accéder aisément aux organes internes. De plus la structuration de ces assemblages ne prend pas directement en compte les contraintes d'installation, de maintenance, de fabrication, les contraintes liées aux variations de pression et de température ainsi que les exigences règlementaires de sécurité (récupération de fuites, etc.).

Toutes ces contraintes conduisent alors à installer des circuits nécessitant des raccordements à l'intérieur des structures (avec risques de fuites) et des systèmes spécifiques d'étanchéité et de drainage de zones.

De plus, les circuits d'air installés dans les mâts comprennent des tuyauteries de prélèvement d'air froid et d'air chaud qui convergent à l'intérieur du mât vers un échangeur thermique. Ces tuyauteries sont distinctes et attachées aux structures. La différence de température entre ces différentes tuyauteries et la structure d'accueil peut être de plusieurs centaines de degrés Celsius. Il en résulte des problèmes de dilatation différentielle qui ne peuvent être résolus de manière simple et efficace.

### EXPOSÉ DE L'INVENTION

L'invention vise à s'affranchir des problèmes soulevés par l'état de la technique, en particulier ceux liés à la complexité et à la masse des mâts tout en satisfaisant aux exigences aérodynamiques, par une approche résolument en rupture de celle consistant à assembler un mât d'aéronef à partir de caissons dédiés et à relier l'ensemble ainsi structuré au moteur et à la voilure par des attaches spécifiques. L'invention propose en effet d'organiser l'interface moteur - voilure autour d'une ossature sensiblement homogène, configurée pour intégrer les fonctions multiples (via les systèmes de circuits et de tuyaux) et abriter les équipements d'un mât (extincteurs, échangeur thermique, etc.). Cette ossature forme un ensemble structurant permettant de transmettre les efforts et de former un carénage aérodynamique adapté à cette ossature.

A cet effet, la présente invention a pour objet un mât d'aéronef destiné à servir d'interface entre un moteur et une voilure ou un fuselage d'aéronef par des moyens d'accrochage rigide au moteur et à la voilure ou au fuselage de l'aéronef. Ce mât présente une ossature structurante et multifonctionnelle unique, formée de canaux principaux accueillant des équipements et des systèmes de transmission entre le moteur et la voilure ou le fuselage, et d'un treillis de bras et de noeuds de liaison entre les bras, ces bras et/ou ces canaux étant aptes à fixer des capots de carénage. Les capots ainsi fixés forment alors un carénage aérodynamique selon une conformation prédéterminée par un positionnement préétabli des bras et des canaux.

Dans ces conditions, les cloisonnements entre les différentes structures des mâts sont supprimés et les panneaux, qui ne sont plus structurants, sont alors aisément démontables: l'accès aux équipements - extincteurs, échangeur thermique - et aux systèmes - câblages électriques, circuits hydrauliques, circuits d'alimentation en carburant et en air, etc. - est donc simplifié et les contraintes d'installation libérées par l'adaptabilité du treillis de liaison formant l'ossature, tout en favorisant une diminution sensible de la masse de l'ensemble.

De plus, ces circuits font partie intégrante de l'ossature, ce qui supprime les problèmes d'installation, l'utilisation de raccords et donc les risques de fuite associés. Par ailleurs, l'intégration des circuits d'air froid et chaud à l'ossature supprime les possibilités de dilatation différentielle car l'ossature est constituée d'un seul matériau.

Selon des modes de réalisation préférés:
- l'ossature est en alliage métallique choisi entre un acier inoxydable contenant au moins 10% de nickel et un alliage majoritairement à base de nickel et de chrome, par exemple des alliages « INCONEL » contenant également du fer, du molybdène, du niobium et du cobalt; ces alliages permettent de résister aux températures et/ou aux puissances moteur au-delà des valeurs actuelles les plus élevées;
- l'ossature est réalisée par une technologie choisie parmi le soudage, le moulage et/ou l'impression 3D (c'est-à-dire « en trois dimensions », cette technologie étant également appelée « Fabrication par Couche Additionnelle » (ou « Additive Layer Manufacturing » en terminologie anglaise) ;
- l'ossature est réalisée soit d'un seul tenant, par l'application d'une technologie de moulage ou d'impression 3D, soit de plusieurs pièces réalisées par moulage et/ou impression 3D et soudées et/ou collées ensemble;
- au moins l'un des systèmes de transmission est intégré aux canaux selon une structure à double peau;
- les capots sont fixés aux bras et/ou aux canaux de l'ossature par des moyens mécaniques démontables.

Dans le présent texte, les qualificatifs « supérieur » et « inférieur » se rapportent à une configuration de suspension de moteur sous la voilure en utilisation standard. En configuration de moteur au-dessus de la voilure, ces qualificatifs seraient bien entendu inversés. Par ailleurs, les termes de localisation « avant », « arrière » et leurs équivalents s'entendent en fonction d'une utilisation standard de l'aéronef dans son déplacement habituel en vol. Le qualificatif « latérale » se rapporte à une visualisation selon un plan parallèle au plan central de symétrie s'étendant longitudinalement dans l'axe d'un avion.

### PRÉSENTATION DES FIGURES

D'autres données, caractéristiques et avantages de la présente invention apparaîtront à la lecture de la description non limitée qui suit, en référence aux figures annexées qui représentent, respectivement :
- les figures 1, 1A et 2, des vues d'un mât d'aéronef conventionnel (déjà commentée) respectivement localisé entre un turboréacteur et une aile d'avion, en agrandissement au-dessus du turboréacteur et en vision latérale;
- les figures 3 et 4, des vues latérale et supérieure d'un exemple de mât à ossature intégré selon l'invention;
- la figure 5, un schéma de tuyau à double peau pour la circulation hydraulique et l'alimentation en carburant, et
- la figure 6, une vue de circuits intégrés dans l'exemple de mât selon l'invention.

### DESCRIPTION DÉTAILLÉE

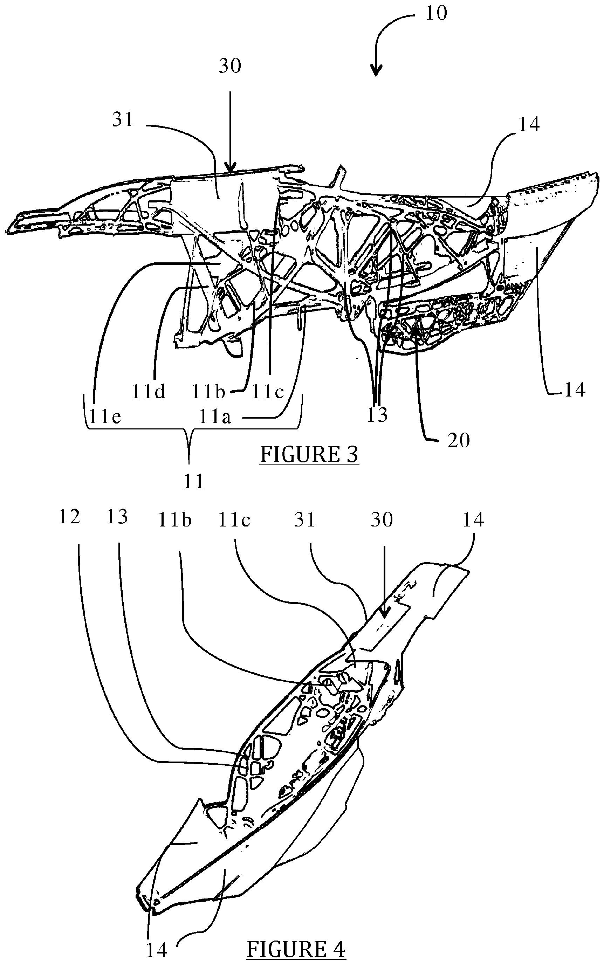

En référence aux vues latérale et supérieure des figures 3 et 4, illustrant un exemple de mât à ossature intégré 10 selon l'invention réalisé par l'application de la technologie 3D dans cet exemple, apparaissent des canaux principaux 11, à savoir les canaux 11a à 11**c**, reliés par des bras 12 formant un treillis de liaison 20. Les bras 12 relient les canaux 11 entre eux et se croisent sur des noeuds 13 de rigidification de l'ensemble de l'ossature 10.

Des capots non structurants 14 sont fixés par des moyens démontables - boulons, clips, collets ou équivalents - aux bras 12 du treillis 20 et aux canaux 11. Sur les figures 3 et 4, une partie des capots 14 n'est pas représentée afin de permettre la visualisation de l'ossature de mât 10, l'ossature 10 étant entièrement recouverte de capots 14 lors de son installation sur une aile d'avion. Et l'ensemble des capots forme un carénage dont l'aérodynamisme est commandé par la conformation qui résulte du positionnement relatif des canaux 11 et des bras 12 du treillis 20.

Avantageusement, des parois 31 de l'ossature 10 forment un logement 30 thermiquement isolant pour un échangeur thermique (non représenté). De manière générale, des parois d'isolation thermique et/ou électrique - faisant partie intégrante de l'ossature - peuvent être prévues entre canaux et bras de treillis pour constituer des logements, par exemple pour un extincteur ou un autre équipement.

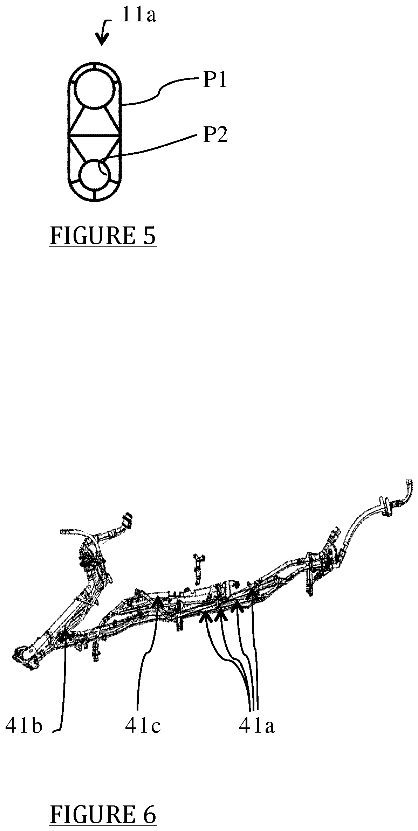

Concernant plus précisément les canaux, un canal 11a à double peau P1 et P2, comme illustré par le schéma de la figure 5, accueillent des circuits, par exemple des tuyaux hydrauliques ou un circuit d'alimentation en carburant (cf. figure 6). Les canaux 11d et 11e accueillent par ailleurs des tuyaux d'air pour le conditionnement de l'air de la cabine.

La vue latérale de la figure 6 illustre les tuyaux hydrauliques 41a - avantageusement configurés en nappe homogène -, le circuit carburant 41b et le tuyau d'extinction 41c à intégrer respectivement dans les canaux 11a, 11b, et 11c (cf. figures 4 et 5) de l'ossature de mât 10 selon l'invention. Ces canaux sont dimensionnés et configurés pour accueillir directement ces circuits et tuyaux.

En particulier, le circuit carburant 41b est intégré en double peau dans le canal 11b, la conformation de la peau externe étanche étant pilotée par les contraintes de tenue structurale et aérodynamiques de l'ossature 10 tout en respectant les diamètres intérieurs et les géométries ainsi que les interfaces côté voilure 2 et côté moteur 3 (cf. figure 1).

L'invention n'est pas limitée aux exemples de réalisation décrits et représentés. Ainsi, le dimensionnement de l'ossature intègre avantageusement les sur-contraintes liées au gradient thermique entre la voilure et le moteur. Par ailleurs, le matériau utilisé pour réaliser l'ossature selon l'invention peut-être un acier inoxydable contenant du nickel ou un alliage majoritairement à base de nickel et de chrome, comme les alliages « INCONEL » 625 ou 718 contenant également du fer, du molybdène, du niobium et du cobalt.

Alternativement à l'attache du mât sous l'aile d'un avion, le mât peut être attaché, dans des réalisations équivalentes, directement sur un fuselage ou sur l'aile d'un avion.

Par ailleurs, l'ossature peut être réalisée d'un seul tenant ou en plusieurs pièces solidarisées par soudage, collage ou tout autre moyen de fixation d'un tel assemblage. La technologie de base utilisée est l'impression 3D et/ou le moulage.

De plus, les attaches sur la voilure et le moteur d'un mât à ossature selon l'invention reprennent celles utilisées dans les mâts à structure à caissons multiples décrits en référence aux figures 1A et 2.

En outre, la densité de bras dans le treillis est sensiblement constante dans l'ossature mais peut avoir une valeur supérieure dans certaines parties du mât, par exemple pour former un carénage inférieur arrière.

## Revendications

1. Mât d'aéronef destiné à servir d'interface entre un moteur (3) et une voilure (2) ou un fuselage d'aéronef par des moyens d'accrochage rigide au moteur (2m, 2r) et à la voilure (2c, 2r) ou au fuselage de l'aéronef, **caractérisé en ce qu'**il présente une ossature structurante et multifonctionnelle unique (10), formée de canaux principaux (11; 11a à 11e) accueillant des équipements et des systèmes de transmission (41a à 41c) entre le moteur (3) et la voilure (2) ou le fuselage, et d'un treillis (20) de bras (12) et de noeuds (13) de liaison entre les bras (12), ces bras (12) et/ou canaux (11; 11a à 11e) étant aptes à fixer des capots de carénage (14) pour former un carénage aérodynamique selon une conformation prédéterminée par un positionnement préétabli des bras (12) et des canaux (11; 11a à 11e).

2. Mât d'aéronef selon la revendication 1, dans lequel l'ossature (10) est en alliage métallique choisi entre un acier inoxydable contenant au moins 10% de nickel et un alliage majoritairement à base de nickel et de chrome.

3. Mât d'aéronef selon l'une des revendications 1 ou 2, dans lequel l'ossature (10) est réalisée par une technologie choisie parmi le soudage, le moulage et/ou l'impression 3D.

4. Mât d'aéronef selon la revendication précédente, dans lequel l'ossature (10) est réalisée soit d'un seul tenant, par l'application d'une technologie de moulage ou d'impression 3D, soit de plusieurs pièces réalisées par moulage et/ou impression 3D et soudées et/ou collées ensemble.

5. Mât d'aéronef selon l'une des revendications précédentes, dans lequel au moins l'un des systèmes de transmission (41a) est intégré aux canaux (11a) selon une structure à double peau (P1, P2).

6. Mât d'aéronef selon l'une des revendications précédentes, dans lequel les capots (14) sont fixés aux bras (12) et/ou aux canaux (11; 11a à 11e) de l'ossature (10) par des moyens mécaniques démontables.

## Patentansprüche

1. Luftfahrzeug-Pylon, der dazu bestimmt ist, durch Einrichtungen zur starren Befestigung am Motor (2m, 2r) und an der Tragfläche (2c, 2r) oder am Rumpf des Luftfahrzeugs als Verbindungsstelle zwischen einem Motor (3) und einem Tragfläche (2) oder einem Luftfahrzeugrumpf zu dienen, **dadurch gekennzeichnet, dass** er ein einziges strukturierendes und multifunktionales Gerüst (10) aufweist, das von Hauptkanälen (11; 11a bis 11e), die Ausrüstungen und Übertragungssysteme (41a bis 41c) zwischen dem Motor (3) und dem Tragfläche (2) oder dem Rumpf aufnehmen, und einem Gitter (20) von Armen (12) und Verbindungsknoten (13) zwischen den Armen (12) gebildet wird, wobei diese Arme (12) und/oder Kanäle (11; 11a bis 11e) Verkleidungshauben (14) fixieren können, um durch eine vorab festgelegte Positionierung der Arme (12) und der Kanäle (11; 11a bis 11e) eine aerodynamische Verkleidung gemäß einer vorbestimmten Gestaltung zu formen.

2. Luftfahrzeug-Pylon nach Anspruch 1, wobei das Gerüst (10) aus einer Metalllegierung ist, die ausgewählt wird aus einem nichtrostenden Stahl, der mindestens 10% Nickel enthält, und einer Legierung hauptsächlich auf der Basis von Nickel und Chrom.

3. Luftfahrzeug-Pylon nach einem der Ansprüche 1 oder 2, wobei das Gerüst (10) durch eine Technik hergestellt wird, die aus dem Schweißen, dem Formen und/oder dem 3D-Druck ausgewählt wird.

4. Luftfahrzeug-Pylon nach dem vorhergehenden Anspruch, wobei das Gerüst (10) entweder aus einem Stück, durch Anwenden einer Technik des Formens oder des 3D-Drucks, oder aus mehreren Bauteilen hergestellt wird, die durch Formen und/oder 3D-Druck hergestellt und miteinander verschweißt und/oder verklebt werden.

5. Luftfahrzeug-Pylon nach einem der vorhergehenden Ansprüche, wobei mindestens eines der Übertragungssysteme (41a) gemäß einer Doppelhaut-Struktur (P1, P2) in die Kanäle (11a) eingebaut wird.

6. Luftfahrzeug-Pylon nach einem der vorhergehenden Ansprüche, wobei die Hauben (14) durch ausbaubare mechanische Einrichtungen an den Armen (12) und/oder Kanälen (11; 11a bis 11e) des Gerüsts (10) fixiert werden.

## Claims

1. An aircraft pylon adapted to serve as an interface between an engine and an aircraft wing or fuselage by means of rigid attachment to the engine and to the wing of the aircraft, **characterized in that** it includes a single multifunctional structural framework formed of main ducts receiving equipment and transmission systems between the engine and the wing or the fuselage and a latticework of arms and nodes connecting the arms, these arms and/or ducts being adapted to attach fairing panels to form an aerodynamic fairing in accordance with a predetermined conformation by a predefined positioning of the arms and the ducts.

2. The aircraft pylon as claimed in claim 1, wherein the framework is of a metal alloy chosen from a stainless steel containing at least 10% nickel and an alloy based mainly on nickel and chromium.

3. The aircraft pylon as claimed in either one of claims 1 or 2, wherein the framework is produced by a technology selected from welding, molding and/or 3D printing.

4. The aircraft pylon as claimed in either one of claims 1 or 2, wherein the framework is produced either in one piece by the application of a molding or 3D printing technology or as a plurality of parts produced by molding and/or 3D printing and welded and/or glued together.

5. The aircraft pylon as claimed in claim 1, in which at least one of the transmission systems is integrated into the ducts in accordance with a double-skin structure.

6. The aircraft pylon as claimed in claim 1, wherein the panels are attached to the arms and/or to the ducts of the framework by demountable mechanical means.
